(19) Europäisches Patentamt
European Patent Office
Office européen des brevets

(11) **EP 4 158 190 B1**

(12) **EUROPEAN PATENT SPECIFICATION**

(45) Date of publication and mention
of the grant of the patent:
**13.08.2025 Bulletin 2025/33**

(21) Application number: **21727878.7**

(22) Date of filing: **25.05.2021**

(51) International Patent Classification (IPC):
*F03G 7/00* (2006.01)

(52) Cooperative Patent Classification (CPC):
**F03G 7/015;** Y02E 10/30

(86) International application number:
**PCT/EP2021/063834**

(87) International publication number:
**WO 2021/239701 (02.12.2021 Gazette 2021/48)**

(54) **BRINE SATURATOR**

SALZLAKENSÄTTIGUNGSVORRICHTUNG

SATURATEUR DE SAUMURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2020 GB 202007804**

(43) Date of publication of application:
**05.04.2023 Bulletin 2023/14**

(73) Proprietor: **Saltpower Holding ApS
6400 Sønderborg (DK)**

(72) Inventors:
• **MADSEN, Henrik Tækker
2450 Copenhagen (DK)**
• **PEDERSEN, Lars Storm
3520 Farum (DK)**

(74) Representative: **Abel & Imray LLP
Westpoint Building
James Street West
Bath BA1 2DA (GB)**

(56) References cited:
**WO-A1-2013/033082    GB-A- 2 532 250
US-A- 4 283 913**

## Description

<u>Field of the Invention</u>

The present invention concerns a brine saturation process. More particularly, but not exclusively, this invention concerns the generation of power, particularly electricity, from the fluid streams used in brine saturation, for example as a precursor to the chlor alkali process. The invention also concerns apparatus for use in such a process.

<u>Background of the Invention</u>

For many industrial processes that use salt solutions it is beneficial for the salinity of the salt solution to be as high as possible, and in some cases for the solution to be saturated. One such processes is the chlor alkali process for the industrial production of chlorine where salt solutions, primarily sodium chloride, undergo electrolysis. The overall reaction is shown below.

$$2NaCl + 2H_2O \rightarrow 2NaOH + H_2 + Cl_2$$

For this process, the concentration of the salt solution sent to the electrolyser should preferably be as high as possible, or fully saturated. Higher concentration in the salt solution allows the electrolyser to operate at a higher power efficiency and to obtain a higher yield of chlorine per unit volume of salt solution.

As these processes consume both salt and water, new water and salt must be added to the system. Salt may be added directly to depleted brine streams to increase the concentration back to saturation, or as a new freshly prepared brine, which also brings new water to the process. To dissolve the salt in the water (to produce the fresh brine) or depleted brine (to replenish it directly), a brine saturator is used.

A brine saturator may be used to increase the salinity of a saline stream. Typically, brine saturators fall into two categories: upflow saturators and downflow saturators.

In upflow saturators, the unsaturated solution flows along with salt into the bottom of a saturator tank. One or more flow generators is used to generate an upward flow of fluid in the saturator tank. Due to the upward flow, a fluidised bed of undissolved salt is formed in the saturator and as the unsaturated solution moves up through this solution, it becomes saturated. The limit for upflow saturators is typically determined by the flow velocity of the solution that brings the salt particles to the surface.

Downflow saturators are based on gravitational flow of an unsaturated solution through a bed of solid salt. Here, the solid salt is placed on a layer of gravel in a tank, and the unsaturated solution enters at the top of the tank. Typically, for a salt solution to reach saturation, the salt layer must have a thickness of at least one foot. The limit for downflow saturators is determined by the flow rate that can be achieved through the salt layer.

It would be advantageous to provide a more efficient brine saturator. Additionally or alternatively it would be advantageous to provide an improved process for brine saturation and/or an improved brine saturator.

US 4 283 913 discusses a saturated non-convective solar pond employed as an unmixing device in conjunction with reverse electro-dialysis or pressure-retarded osmosis for power generation.

<u>Summary of the Invention</u>

In a first aspect of the invention, there is provided a brine saturation process having the features of claim 1 below. In a second aspect of the invention there is provided a brine saturation system having the features of claim 11 below. Optional but preferred features are set out in the independent claims.

In a first aspect of the invention there is provided a brine saturation process comprising:

- increasing the salinity of an unsaturated saline stream by passage through a brine saturator in which salt is dissolved into the unsaturated saline stream to produce a high salinity stream;
- converting latent osmotic energy present in said high salinity stream into power, (for example electricity), by passage through an osmotic power unit comprising a membrane in which said high salinity stream is passed over one side of said membrane, a low salinity stream being passed over the other side of said membrane; and
- using an output stream derived from the high salinity stream following passage through the osmotic power unit as the unsaturated saline stream.

The inputs and outputs to the brine saturation process may be balanced to provide a steady state process with constant volume at the (theoretical) boundary of the system. The inputs to the process are the (solid) salt and the low salinity input stream (which may be referred to as the aqueous feed stream). The outputs are energy (for example in the form of electricity, from the osmotic power unit) and a brine stream (the portion of the high salinity stream that leaves the process upstream of the osmotic power unit). Thus (and without wishing to be bound by theory) it is believed that the recirculation of the high salinity stream/unsaturated saline stream between the brine separator and the osmotic power unit creates a solvation entropy engine that can be viewed as analogous to a heat engine.

In contrast to, for example, prior art osmotic power generation processes which only harvest the entropy generated by the mixing of the high and low salinity streams, the present invention may capture at least some of the solvation entropy generated by dissolving a salt with the unsaturated stream in the brine generator. This energy is captured using the osmotic power unit which generates electricity (or other forms of power, for example mechanical work) that may be used in full or in part to power the brine saturation process. In some circumstances, the osmotic power unit may generate surplus energy that can be used elsewhere. It will be appreciated that the term 'converting latent osmotic energy present in said high salinity stream into power' refers to harvesting latent osmotic energy as useful work - for example electricity or other forms of useful work.

Additionally or alternatively, because the low salinity stream is used to reduce the salinity of the high salinity stream rather than being directly added to the brine saturator a wider variety of sources can be used as the low salinity stream, provided that the salinity of the stream is lower than the high salinity stream. For example, seawater may be used.

The process comprises a brine saturation step in which the salinity of an unsaturated saline stream is increased by passage through a brine saturator and a power generation step in which latent osmotic energy is converted into a useful form, for example electricity, in an osmotic power unit. The steps of the process may be carried out simultaneously.

The salt content of the high salinity stream (or brine stream) from the brine saturator may be anything up to saturation. The salt content may be at least 10% wt, preferably at least 15% wt, preferably at least 20% wt, especially at least 25% wt. Thus, the high salinity stream may be a saturated saline stream.

It will be understood that such saline streams may contain a wide variety of dissolved salts, with a preponderance of sodium chloride, and that "salt content" refers to total salt content. The exact nature of the salt(s) present in such streams is not important. Similarly, the terms high(er)-salinity and low(er)-salinity are used herein to refer to streams having a corresponding "salt content" - the exact nature of the salt(s) present in such streams is not important. Throughout this specification, unless the context requires otherwise, "low salinity" should be understood to include zero salinity.

Similarly, it will be understood that the salt dissolved into the unsaturated saline stream in the brine saturator may contain a wide variety of salts, with a preponderance of sodium chloride.

The low salinity stream (or aqueous feed stream) may be obtained from any source, but is typically sea water, fresh or brackish water obtained, for example, from a river or a lake, or waste water obtained from an industrial or municipal source, such as process condensate.

The low salinity stream may be subject to any necessary pretreatment steps prior to the osmotic power generation step. For example, filtration to remove solid material may be necessary, as might other conventional processes depending on the exact nature of the stream.

The inputs to the brine saturation step are an unsaturated saline stream and salt. It will be appreciated that the salt is in solid form. It will be understood that the properties of the unsaturated saline stream must be such that salt will dissolve into the unsaturated saline stream.

An output from the brine saturation step is a high salinity saline stream. It will be appreciated that the salinity of the high salinity saline stream is greater than the salinity of the unsaturated saline stream.

The process may comprise converting latent osmotic energy present in a first part of said high salinity stream into power (electricity) by passage through the osmotic power unit, a second part of said high salinity stream being used as a brine stream in other industrial processes, for example the chlor alkali process and/or the preparation of brine for road de-icing. The process may comprise splitting the high salinity stream into first and second parts, wherein the first part passes through the osmotic power unit and using the second part of the saturate saline stream in the production of chlorine. It may be that the brine stream is used as the electrolyte in an electrolytic cell comprising one or more electrodes, for example an anode and a cathode, to produce chlorine by electrolysis.

It may be that the method comprises simultaneously (i) increasing the pressure of the high salinity stream prior to passage through the osmotic power unit and (ii) decreasing the pressure of the output stream, for example by passage through a pressure exchanger in which pressure is transferred from the output stream to the high salinity stream. It may be that the flow rate of the first output stream passed to the pressure exchanger is equal to the flow rate of the high salinity stream on entry to the osmotic power unit. Use of such a pressure-exchanger may increase the efficiency of the process.

The process comprises an osmotic power generation step in which latent osmotic energy present in said high salinity stream is converted into power by passage through the osmotic power unit. An osmotic power unit is a unit which converts latent osmotic energy into power, for example electricity. Any suitable osmotic power unit may be used in the process of the present invention. The inputs to the osmotic power generation step will be a low salinity stream and a high salinity stream. After passage over a membrane (for example a semi-permeable membrane that permits the passage of water in a PRO process, or semi-permeable membrane that permits the passage of ions having a particular charge in a RED process), the salinity of the high salinity stream will be reduced and the salinity of the low salinity stream will be increased.

The osmotic power unit may comprise a semi permeable membrane. The semi permeable membrane may permit the passage of particular atoms and/or molecules contained in the high or low salinity streams and prevent the passage of other atoms and/or molecules. Thus, the high and low salinity streams may mix during passage through the osmotic power unit as atoms and/or molecules pass between the streams thereby leading to a change in salinity of the streams. The osmotic power unit may be configured to generate electricity from this mixing.

An output stream from the osmotic power unit will be derived from the original high salinity stream. Such an output stream may comprise at least part of the original high salinity stream its salinity having been reduced by passage through the osmotic power unit. This stream is used as the unsaturated saline stream. The output stream derived from the high salinity stream may comprise the high salinity stream (or a first part thereof) and solvent (e.g water) from the low salinity stream. This would be the case if PRO (see below) is used. Alternatively, for example if RED (see below) is used the output stream derived from the high salinity stream may comprise the high salinity stream (or a first part thereof) from which at least some of the cations and anions of the salt have been removed.

One output stream from the osmotic power unit may be a waste stream, for example derived from the low salinity stream. The waste stream may have higher salinity than the low salinity stream. The waste stream(s) may be disposed of as required, for example by discharge into a neighbouring sea, river or lake. Depending on the permissible discharge concentration into the neighbouring body of water, the parameters (for example the number of membranes and/or osmotic units) in the osmotic power unit can be varied until the allowable salt concentration is obtained in the waste stream. Alternatively, the waste stream may be combined with the output stream derived from the high salinity stream for use as the unsaturated stream. In this way, the volume of the brine stream (the portion of the high salinity stream that leaves the process upstream of the osmotic power unit) may be increased.

The osmotic power unit may convert latent osmotic energy present in said high salinity stream into electricity by Pressure Retarded Osmosis (PRO). It may be that the osmotic membrane comprises a semi-permeable membrane which permits the passage of water but not the passage of salts, and said high salinity stream is passed over one side of the semi-permeable membrane, the low salinity stream being passed over the other side of said membrane.

PRO may be an efficient and effect process for capturing the solvation energy generated when salt is dissolved by the unsaturated solution in the brine saturator. Additionally and/or alternatively, using a semi-permeable membrane allow for use of a lower quality aqueous feed stream and/or remove the need for additional filtering steps as the aqueous feed stream is filtered by passage through the membrane before reaching the brine saturator.

In a PRO process the semipermeable membrane is used to separate a less concentrated solution (the low salinity or aqueous feed stream) from a more concentrated solution (the high salinity stream). The membrane causes solvent to pass from the less concentrated solution (with low osmotic pressure) to the more concentrated solution (with high osmotic pressure) by osmosis, and this leads to an increase in pressure on the side of the membrane to which the solvent diffuses due to the increased volume in the confined space. This pressure can be harnessed to generate electricity. The passage of the solvent to the more concentration solution also reduces the salinity of that solution. Thus, in the present invention, the salinity of the high salinity stream may be reduced by passage through the osmotic power unit thereby producing an unsaturated saline stream that can be sent back to the brine saturator.

Semi-permeable membranes for use in PRO are commercially available, and any suitable membrane may be used. More than one membrane may be present, and combinations of different types of membranes may be used. Thus the osmotic power unit may contain more than one osmosis unit, each osmosis unit containing a semi-permeable membrane. As well as at least one membrane, an osmotic power unit may include means for converting pressure or flow generated by osmosis into electricity. Typically this means will be a turbine connected to a generator, but any suitable means may be used.

An osmotic power unit of this type can also be seen as an entropy harvester. Solvent flows from the low-salinity stream to the high-salinity stream thereby increasing (or generating) entropy which is then harvested by using the increased pressure of the high-salinity stream, for example to generate electricity, for example via a turbine.

In the case that a semi-permeable membrane is used in the osmotic power unit, it may be the solvent (e.g. water) used in the brine saturator passes through the membrane of the osmotic power unit before being used in the brine saturator. It may be that once the process is underway new solvent is only added to the brine saturator after passing through the semi-permeable membrane of the osmotic power unit.

The output streams from a first pass over a semi-permeable membrane will both have lower salinity that the original high salinity stream and higher salinity than the original low salinity stream. At equilibrium, the two streams would have equal salinity, but this is unlikely to be achieved in practice. Therefore, either output stream can be reused as either the first stream or the second stream for a second pass over the same membrane, or as either the first stream or the second stream over another membrane. These reused streams may be used alone, or merged with other input streams. The osmotic power generation process may be a multistep process, each step comprising passage of a relatively high salinity stream and a relatively low salinity stream over a membrane in an osmotic power unit. The high concentration of a stream produced from a brine separator may facilitate the use of such a multi-step process. Each step may have a different pressure and/or flux setting depending on the difference in salinity between the initial input streams for each pass. Tailoring the pressure and/or flux setting in this manner may increase the efficiency of the process. As long as an outgoing stream from an osmosis unit has higher salinity than the initial low salinity stream, it is possible to operate an additional osmosis unit. The optimal number of cycles will depend on the initial content of the streams, the efficiency of the membranes, and the flow rates selected.

The osmotic power unit may contain more than one osmosis unit, each osmosis unit comprising a membrane. The output from each osmosis unit will be a first outgoing stream from a first (initial higher salinity) side of the membrane and a second outgoing stream from a second (initial lower salinity) side of the membrane. These streams may be handled separately or at least partially merged.

In the case that the process uses a pressure exchanger, it may be that a first part of the output stream is passed through the pressure exchanger and a second part of the output stream is passed through a turbine in the osmotic power unit. It may be that electricity is generated by expansion of the second part of the output stream during passage through the turbine. The first part of the output stream may be passed to the brine saturator for use as the unsaturated saline stream via the pressure exchanger. The second part of the output stream may be passed to the brine saturator for use as the unsaturated saline stream via the turbine. The process may comprise recombining the first and second parts of the output stream after passage through the pressure exchanger and the turbine respectively for use as the unsaturated saline stream. The flow rate of the first part of the output stream returned to the pressure exchanger may be equal to the flow rate of the high salinity stream on entry the osmotic power unit. The flow rate of the second part of the output stream passed to the turbine may be equal to the difference in flow rate between the low salinity stream at inlet and outlet of the osmotic power unit.

It will be appreciated that water will flow from the low salinity stream to the high salinity stream across the semi-permeable membrane as long the pressure applied to the high salinity solution is lower than the difference in osmotic pressure. Where saturated sodium chloride is used as the high salinity stream, the osmotic pressure can be more than 400 bar.

It may be that the low salinity stream is pressurised using a feed pump prior to passage through the osmotic power unit.

The osmotic power unit may convert latent osmotic energy present in said high salinity stream into electricity by Reverse ElectroDialysis (RED) . In an osmotic power unit configured to produce electricity by RED a stack of ion exchange membranes is located between an anode and a cathode. Each ion exchange membrane is either a cation exchange membrane (permits the passage of cations but not anions) or anion exchange membrane (permits the passage of anions but not cations). Thus each ion exchange membrane is a semi-permeable membrane permitting the passage of ions with a negative charge or ions with a positive charge. The stack comprises a plurality of units, each unit comprising (in order) a high-salinity channel, a cation exchange membrane (CEM), a low salinity channel, and an anion exchange membrane (AEM). In use, cations from the high-salinity channel pass through the CEM to the low salinity channel of the same unit, while anions from the high-salinity channel pass through the AEM of the adjacent unit into the low salinity channel of an adjacent unit. This flow of ions can be used to generate an electric current. By way of example, where the salt of the present process comprises sodium chloride, positively charged sodium ions will pass through the CEM from the high salinity stream to the low salinity stream and negatively charged chlorine ions will pass through the AEM from the high salinity stream to the low salinity stream. Thus, the salinity of the high salinity stream is reduced by passage through the osmotic power unit to produce an unsaturated saline stream that can be sent back to the brine saturator.

It may be that the osmotic power unit comprises a cation exchange membrane and an anion exchange membrane. The high salinity is passed over one side of the cation exchange membrane, the low salinity stream being passed over the other side of the cation exchange membrane and one side of the anion exchange membrane. The osmotic power unit may comprise a plurality of cation exchange membranes arranged in an alternating stack with a plurality of anion exchange membranes. The stack may be located between an anode and a cathode.

RED may be an efficient and effective process for capturing the solvation energy generated when salt is dissolved by the unsaturated solution in the brine saturator. Additionally and/or alternatively, use of RED may reduce the freshwater requirement of the brine saturation process in comparison to processes in which the salinity of the high salinity stream is reduced by dilution.

In a second aspect of the invention there is provided a brine saturation system. The system comprises a brine saturator configured to increase the salinity of an unsaturated saline stream to produce a high salinity stream. The system comprises an osmotic power unit configured to generate power (for example electricity) using the difference in salinity between a low salinity stream and the high salinity stream. The system is arranged such that an output stream from the osmotic power unit is passed to the brine saturator for use as the unsaturated saline stream, said output stream being derived from the high salinity stream following passage through the osmotic power unit.

It may be that the osmotic power unit is arranged to generate electricity through Pressure Retarded Osmosis (PRO) using the difference in salinity between the high salinity stream and the low salinity stream. The osmotic power unit may comprise a semi-permeable membrane which permits the passage of water but not of dissolved salts. The system may be arranged so that the high salinity stream passes over one side of the semi-permeable membrane and the low salinity stream passes over the other.

It may be that the osmotic power unit is arranged to generate electricity through Reverse Electrodialysis (RED) using the difference in salinity between the high saline stream and the low salinity stream. The osmotic power unit may comprise a stack of ion exchange membranes located between an anode and a cathode. Each ion exchange membrane is either a cation exchange membrane (permits the passage of cations but not anions) or anion exchange membrane (permits the passage of anions but not cations). The stack comprises a plurality of units, each unit comprising (in order) a high-salinity channel, a cation exchange membrane (CEM), a low salinity channel, and an anion exchange membrane (AEM).

The brine saturator may comprise a compartment for receiving the unsaturated saline stream.

The brine saturator may be an upflow saturator. The upflow saturator may comprise an inlet in a lower region of the compartment and be configured such the unsaturated saline stream and/or salt enters the compartment via the inlet. The upflow generator may comprise one or more flow generators configured to provide an upward flow of liquid in the compartment. The flow generators may comprise pumps, jets, nozzles or any other suitable devices for generating an upward flow. The upflow generator may comprise an outlet in an upper region of the compartment and be configured such that the high salinity stream exits the compartment via the outlet.

The brine saturator may comprise a downflow saturator. The compartment may be configured to receive and/or may contain a layer of gravel. The compartment may be configured to receive and/or may contain a layer of salt, for example on top of the layer of gravel. The downflow saturator may comprise an outlet in a lower region of the compartment and be configured such that the high salinity stream exits the compartment via the outlet. The downflow saturator may comprise an inlet in an upper region of the compartment and be configured such that the unsaturated saline stream enters the compartment via the inlet. The downflow saturator may be configured such that the (initially) unsaturated saline stream flows downward from the inlet to the outlet via the layers of gravel and/or salt. The downflow saturator may be configured such that the unsaturated salt stream flow downwards under the influence of gravity.

The brine saturator may combine any of the features described above in reference to an upflow and downflow saturator.

The system may comprise a feed pump, pressure exchanger and/or any other element described in relation to the process of the first aspect.

In a third aspect of the invention, there is provided a system for the production of chlorine comprising an energy generation system in accordance with the second aspect. Chlorine may be produced using the chlor alkali process. The system of the third aspect may further comprise at least one electrolytic cell configured to produce chlorine from electrolysis of brine, wherein the system is arranged such that the electrolytic cell receives at least part of the high salinity stream from the brine saturator for use as an electrolyte in the electrolytic cell.

Use of a system in accordance with the second aspect in the production of chlorine may be particularly advantageous as the unsaturated saline stream (and consequently the brine stream) may contain fewer impurities as a result of passage through the osmotic power unit thereby improving the efficacy of the chlor-alkali process and/or reducing or removing the need for additional filtering/treatment of the brine prior to use in the chlor alkali process.

The electrolytic cell may comprise an ion-selective membrane that allows the passage of cations (for example $Na^+$) but not anions (for example $OH^-$) or vice versa. The electrolytic cell may comprise an anode and a cathode, for example located either side of the ion-selective membrane. In the case that the brine is to be used in the production of chlorine, the salt may be predominantly sodium chloride. The chlor alkali process is a well-known industrial process and the operation of the process is well understood by the skilled person.

It will be appreciated that while the process is referred to herein as a brine saturation process it is also a power or an electricity generation process and may be referred to as such. Similarly, while the apparatus is referred to as a brine saturation system it is also a power and/or an electricity generation system and may be referred to as such. It will be understood that the process of the present invention may be described as a power generation process because the osmotic power unit harvests latent osmotic energy into a useful form. It will be understood that the process of the present invention may be described as an electricity generation process because the osmotic power unit produces electricity. It will be appreciated that the amount of electricity produced will vary depending on the process parameters. The osmotic power unit may provide enough electricity to power the brine saturation process and provide a surplus for use elsewhere, or just enough electricity to power the brine saturation process, or an external supply of power in addition to that provided by the osmotic power unit may be required to run the brine saturation process.

It will of course be appreciated that features described in relation to one aspect of the present invention may be incorporated into other aspects of the present invention. For example, the process of the invention may incorporate any of the features described with reference to the apparatus of the invention and *vice versa*.

Description of the Drawings

Embodiments of the present invention will now be described by way of example only with reference to the accompanying schematic drawings of which:

Figure 1 shows an example process according to the invention;
Figure 2 shows a variation on the process of Figure 1;
Figure 3 shows a variation on the process of Figure 1;
Figure 4 shows an osmotic power unit suitable for use in the process of Figure 1;
Figure 5 shows (a) a downflow brine saturator and (b) an upflow brine saturator suitable for use in the process of Figure 1 or 7;
Figure 6 shows an electrolysis cell suitable for use in the process of Figure 1 or 7;
Figure 7 shows a second example process according to the invention; and
Figure 8 shows an osmotic power unit suitable for use in the process of Figure 7.

Detailed Description

In many cases it is necessary to dissolve solids into solution. In this process, atoms or molecules locked in the solid will interact with the solvent and move out into the solution as dissolved species. The change from a system consisting of two relatively pure phases, a solid and a solvent, to a mixed solution will give an increase in entropy.

$$\Delta S = S^{\theta}_{A(aq)} - S^{\theta}_{A(s)}$$

Depending on the relative difference in energy between solid-solid, solvent-solvent and solid-solvent interactions, enthalpy may either increase, decrease or stay unchanged, which can lead to further changes in entropy as heat is either added or removed from the system. As long as the net change in entropy is increasing, the dissolution process will be spontaneous.

The entropy generation is available as Gibbs free energy, in this case called mixing energy as described by the following equation:

$$-\Delta G_{mix} = RT \left( \left[ \sum x_i ln(a_i) \right]_M - \phi_A \left[ \sum x_i ln(a_i) \right]_A - \phi_B \left[ \sum x_i ln(a_i) \right]_B \right)$$

where $G_{mix}$ is the Gibbs free energy of mixing, R is the gas constant, T the absolute temperature, $x_i$ the mole fraction of species "i", $a_i$ the activity of species "i", $\phi_A$ and $\phi_B$ are the ratios of moles in solutions A and B respectively to the total moles in the system and solution M is a mix of solutions A and B.

One method that can be used to extract mixing energy is pressure retarded osmosis, but any method that can harness mixing energy can be used.

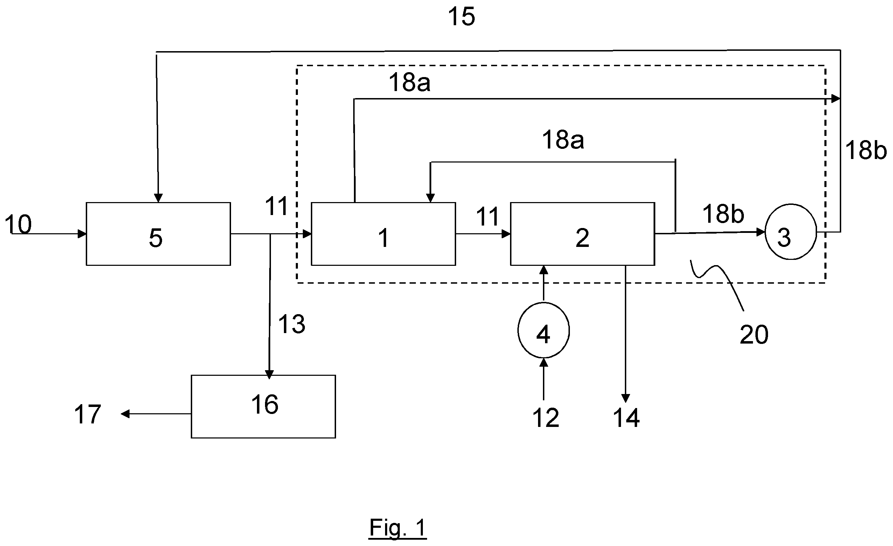

Figure 1 shows an example brine saturation process in accordance with an embodiment of the invention. Unsaturated brine 15 enters a salt saturator 5 where it mixes with solid salt 10 to produce a stream of saturated solution 11 (hereafter the saturated stream 11). In other embodiments, the solution leaving the salt saturator 5 may be at less than saturation. In some embodiments the salt saturator 5 is an upflow saturator or a downflow saturator, or combines elements of upflow and downflow saturators. An output stream 13 is split off from saturated stream 11 and sent for further processing while the remainder of the saturated stream 11 is sent to an osmotic power unit 20 (denoted by a dashed box in Fig. 1), in this embodiment, an osmotic power unit 20 that generates electricity using PRO.

On entry into osmotic power unit 20, a pressure exchanger 1 pressurizes the saturated stream 11 to a pressure below the osmotic pressure of the saturated stream 11. The saturated stream 11 is then passed to one side of a semipermeable membrane 2. A feed pump 4 is used to pump a feed solution 12, having lower salinity than the saturated stream 11, to the other side of the membrane. Optionally, the feed solution 12 may go through various pre-treatment steps before being passed to the semipermeable membrane 2. Due to the osmotic pressure gradient, water from the feed solution 12 permeates the semipermeable membrane, 2 and mixes with the saturated stream 11 to produce a diluted outlet stream 18 which may be said to be derived from the saturated stream 11. The feed solution 12 that has not permeated the semipermeable membrane 2 leaves the osmotic power unit as concentrated feed solution 14. The diluted outlet stream 18 is split into two parts; a first stream 18a is passed to the pressure exchanger 1 and a second stream 18b is passed to an electricity generating device 3. In some embodiments, electricity generating device 3 is a turbine, in other embodiments other devices may be used. After passage through the pressure exchanger 1 and electricity generating device 3 the first

EP 4 158 190 B1

and second streams 18a, 18b are recombined and passed to the salt saturator 5 as unsaturated brine 15. Concentrated output stream 14 is disposed of as appropriate. As a consequence of the flow of water from the feed solution 12 to the saturated stream 11 the flow rate of outlet stream 18 from the membrane 2 is larger than the flow rate of the saturated stream 11 at entry to the membrane. The flow rate of the second part 18a going back to the pressure exchanger 1 will be equal to the flow rate of the saturated stream 11 at entry to the pressure retarded osmosis unit 20 while the stream going to the turbine 3 will have a flow rate equal to the permeate flow rate through the membrane, which is equal to the difference in flow rate between the feed solution 12 and concentrated feed solution 14.

In some embodiments, stream 13 is sent for use in an electrolysis cell 16 of a chlor alkali process to produce chlorine 17. In other embodiments, stream 13 may be used in any other industrial process requiring a brine stream, for example in the preparation of brine for road deicing.

In some embodiments the concentrated feed solution 14 may be mixed with the unsaturated brine 15 downstream of the turbine 3, thereby increasing the volume of brine produced as stream 13.

Processes and systems in accordance with the present example embodiment add water to the brine saturator through the pressure retarded osmosis unit. As a result part of the entropy released during the dissolution process may be captured and used for energy generation. Since the water is added via a semi-permeable membrane, any impurities may be rejected to the same extent as would be achieved using reverse osmosis thereby ensuring that the water added to the brine saturator will have a very high purity. The filtering of the water inherent to this process may facilitate omission of a water purification plant like reverse osmosis, ion exchange or evaporators as pretreatment of the feed stream. The inherent filtering can allow different wastewaters, such as process condensate and cooling water, to be used and recycled into the process, thereby saving resources. Processes in accordance with the present example embodiment may also allow the use of a wider variety of sources for the feed stream, provided the feed stream has a lower salinity than the saturated stream and the diluted outlet stream. For example, seawater may be used.

In this embodiment the pressure retarded osmosis system is based on the use of a pressure exchanger 1 to pressurize the stream 11 which gives an overall increase in system efficiency and therefore larger net energy generation. In other embodiments the pressure exchanger may be absent or the stream 11 may be pressurized in other ways.

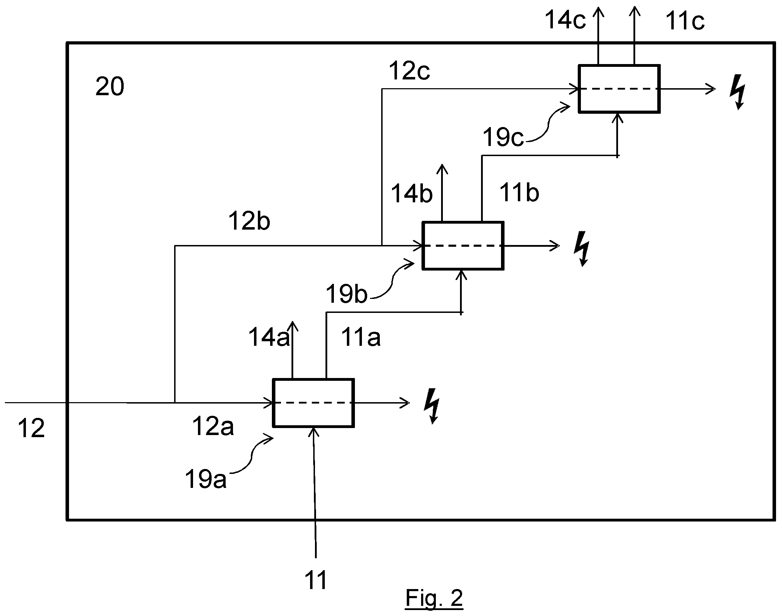

Figure 2 shows a portion of a variant of the process of Figure 1 in which the osmotic power unit 5 comprises multiple osmosis units 19a, 19b and 19c connected in series. Like elements are denoted with like reference numerals. Only those elements of the Figure 2 embodiments which differ from the Figure 1 embodiment will be discussed here. Each osmosis unit 19a, 19b and 19c contains a semi-permeable membrane (not shown) which permits passage of water but not of salts. Feed stream 12 branches into three streams, 12a, 12b, 12c, each going to a different one of the osmotic units 19a, 19b, 19c. Original high saline stream 11 flows at one side of the semipermeable membrane of the first unit 19a, while lower salinity stream 12a obtained from original lower salinity stream 12 flows at the other side. Output stream 14a from osmosis unit 19a, which is derived from lower salinity stream 12a is disposed of as appropriate. Output stream 11a from osmosis unit 19a, which has a salt content lower than that of original input stream 11, is fed to a second osmosis unit 19b where it is passed over one side of a semi-permeable membrane. A second input stream 12b of relatively low salinity water obtained from stream 12 flows at the other side. Although the difference in salinity between streams 11a and 12b is lower than the difference in salinity between streams 11 and 12a, there is still a difference in salinity, and electricity can be generated by osmosis. Output stream 14b from osmosis unit 19b, which is derived from lower salinity stream 12b is disposed of as appropriate. Output stream 11b from osmosis unit 19b, which has a salt content lower than that of original input stream 11, and also lower than stream 11a, is fed to a third osmosis unit 19c where it is passed over the other side of a semi-permeable membrane from a further input stream 12c of relatively low salinity water. Although the difference in salinity between streams 11b and 12c is lower than the difference in salinity between streams 11 and 12a, or between streams 11a and 12b, there is still a difference in salinity, and electricity can be generated by osmosis. Output stream 14c from osmosis unit 19c, which is derived from lower salinity stream 12c is disposed of as appropriate. Output streams from the process of Figure 2 are aqueous exit streams 14a, 14b, 14c which are derived from the feed solution 12 and diluted output stream 11c which is derived from the saturated solution 11. Output stream 11c is recycled to the brine saturator (not shown in Figure 2), optionally via a pressure exchanger as discussed above in connection with Figure 1.

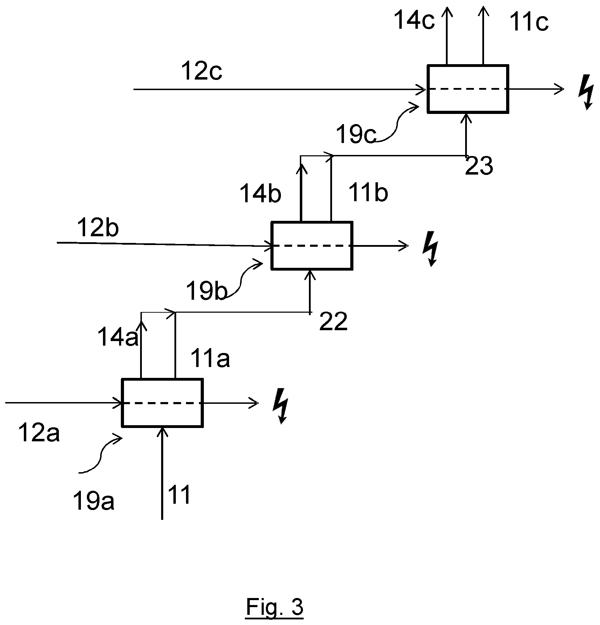

Figure 3 shows a variant of Figure 2 in which input streams 12a, 12b and 12c of relatively low salinity water are provided as separate input streams, each undergoing one or more pre-treatments steps (not shown). Only those elements of the Figure 3 embodiments which differ from the Figure 2 embodiment will be discussed here.

In the system of Figure 3 the output streams are also handled in a different way. Outlet streams 14a and 11a from osmosis unit 19a are merged, and at least part of the merged stream is provided as input stream 22 to osmosis unit 19b. The merged stream 22 will have a salt content lower than that of original input stream 11, and although the difference in salinity between stream 22 and stream 12b is lower than the difference in salinity between streams 11 and 12a, there is still a difference in salinity, and electricity can be generated by osmosis. Similarly, outlet streams 14b and 11b from osmosis unit 19b are merged, and at least part of the merged stream is provided as input stream 23 to osmosis unit 19c.

It will be understood that Figures 2 and 3 show an osmosis power unit 20 consisting of three osmosis units 19 each containing a semi-permeable membrane, but that any suitable number of units can be used, the choice being determined by a combination of technical and economic factors. In general, the higher the initial salinity of the saline stream 1, the higher the number of osmosis units which may be used.

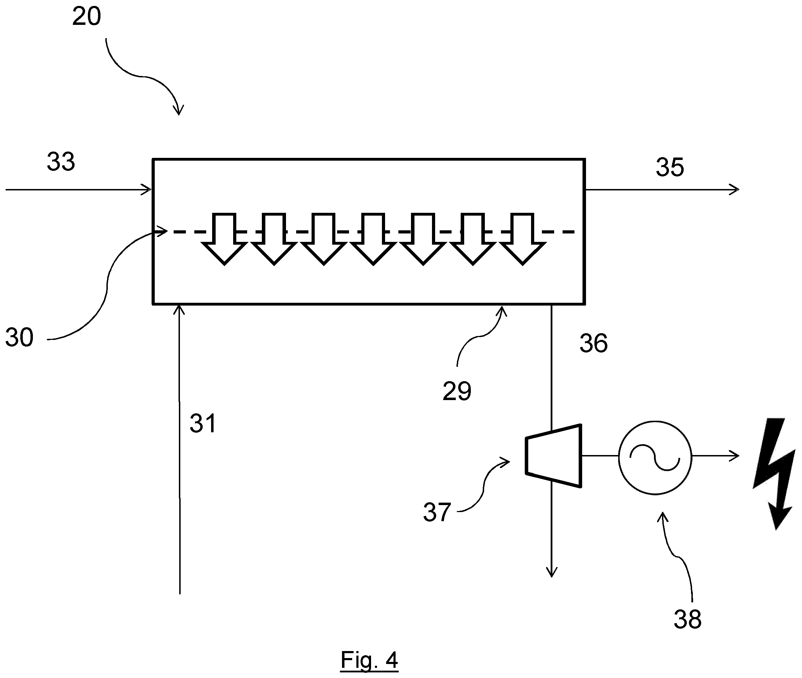

Figure 4 shows more details of an osmotic power unit 20, for example of the type used in Figure 1. A saline stream 31 (which may for example be saturated stream 11 of Figure 1) is passed to an osmosis unit 29 containing a semi-permeable membrane 30 which permits passage of water but not of salts, and flows at one side of membrane 30. An aqueous stream 33 which is of lower salinity than stream 31 (for example feed stream 12 in Figure 1) enters osmosis unit 29 and flows at the other side of membrane 30. Arrows show the direction of water transport by osmosis across membrane 30. An output stream 35 (for example stream 14 in Figure 1) derived from original input stream 33 and now containing a higher concentration of salt, leaves osmosis unit 29. An output stream 36 consisting of original input stream 31 now containing a lower concentration of salt (for example output stream 18 in Figure 1), leaves osmosis unit 29 via a turbine 37 which drives a generator 38 thus producing electricity.

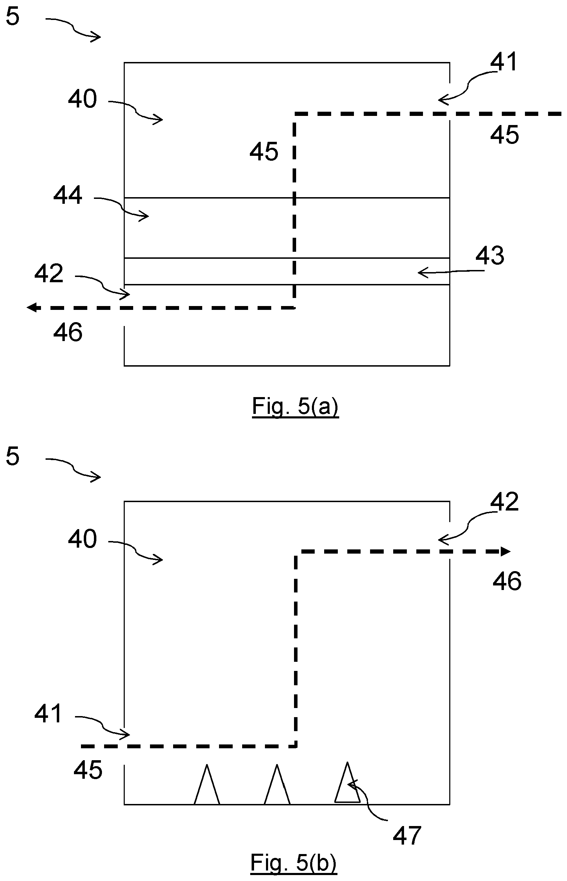

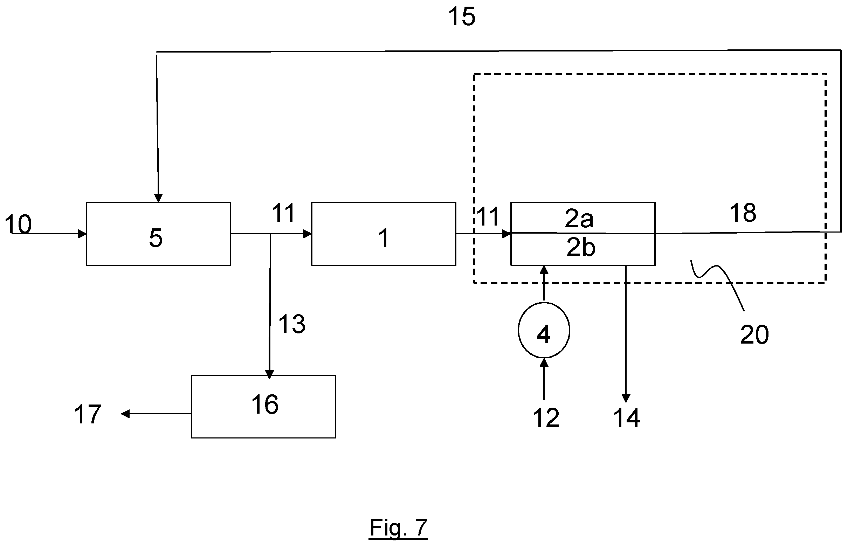

Figure 5 (a) shows more detail of a downflow brine saturator 5, of a type suitable for use as the brine saturator of Figure 1 or Figure 7. A tank 40 comprises an inlet 41 in an upper region of the tank 40 and an outlet 42 in a lower region of the tank. A bed of gravel 43 extends across the width of the tank 40 at a location between the inlet 41 and outlet 42. A layer of salt 44 extends across the top of the bed of gravel 43. In use an unsaturated saline stream 45 (for example unsaturated saline stream 15 of Figure 1) enters the top of the tank 40 via the inlet 41 and flows downward under gravity through the layer of salt 44 and bed of gravel 43 before leaving the tank 40 via the outlet 42 as a saturated saline stream 46 (for example high salinity stream 11). Salt from the layer of salt 44 dissolves into the unsaturated saline stream 45 as it passes and thereby increases the salinity of the stream. Provided that the layer of salt 44 has an appropriate thickness the saline stream is saturated by the time it reaches the outlet 42.

Figure 5(b) shows more detail of an upflow brine saturator, of a type suitable for use as the brine saturator of Figure 1 or 7. A tank 40 comprises an inlet 41 in a lower region of the tank 40 and an outlet 42 in an upper region of the tank. A plurality of flow generators 47, for example nozzles and/or jets connected to a pump (not shown) are located at the bottom of the tank 40. In use, salt and an unsaturated saline stream 45 (for example unsaturated saline stream 15) enter the bottom of the tank 40 via the inlet 41 and forms a fluidized bed with the salt in a lower region of the tank. As salt is dissolved into the stream 45, the buoyancy of the solution and the action of the flow generators 46 causes more highly saturated solution to rise upwards forming a saturated saline stream 46 that leaves the tank 40 via the outlet 42.

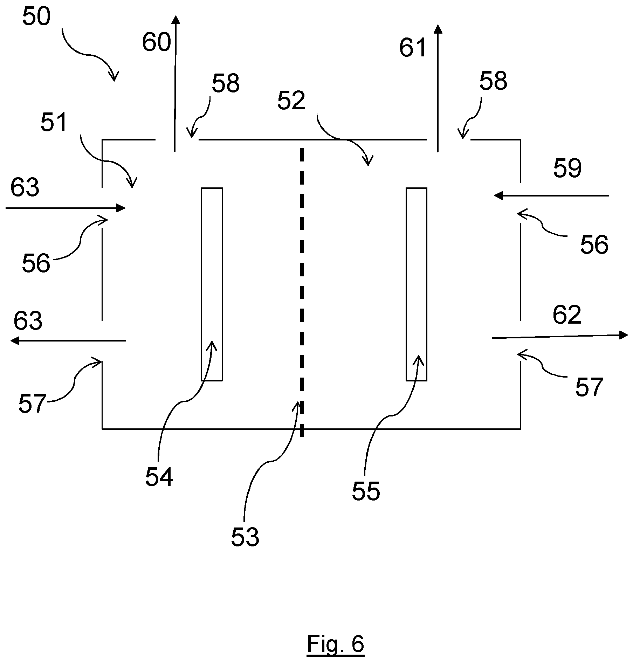

Figure 6 shows more detail of an electrolysis cell 50, of a type suitable for use as the electrolysis cell of Figure 1 or Figure 7. The cell 50 is divided into a first compartment 51 and a second compartment 52 by an ion-selective membrane 53. A cathode 54 is located in the first compartment 51 and an anode 55 is located in the second compartment 52. Each compartment 51, 52 has a fluid inlet 56, a fluid outlet 57 and a gas outlet 58. In use, brine 63 (predominantly comprising sodium chloride as the salt) enters and exits (with reduced salinity) via the fluid inlet 56 and fluid outlet 57 respectively of the first compartment. Water 59 enters the second compartment 52 via the fluid inlet 56. The ion-selective membrane 53 allows positively charged sodium ions to pass, but prevents other negatively charged ions (including hydroxide and chloride) from passing. Applying a voltage across the cathode 54 and anode 55 causes sodium ions to pass across the membrane and the production of chlorine gas 30 in the first chamber 51 which exits via the gas outlet 58.

Simultaneously, hydrogen gas 61 (leaving via the gas outlet 58) and sodium hydroxide 62 (leaving via the fluid outlet 56) are produced in the second chamber 52. In addition to the membrane cell process for chlor alkali production as described here, the diaphragm cell (where the anode is separated from the cathode by a permeable diaphragm) and mercury cell (in which sodium forms an amalgam with mercury at the cathode, and is then separated in a decomposer to produce hydrogen gas and caustic soda solution) processes may also be used.

In the embodiment a Figure 1 a PRO osmotic power unit is used. In other embodiments a RED osmotic power unit may be used to generate electricity from the difference in salinity between a saturated or high salinity stream and the feed stream by reverse electrodialysis. Figure 7 shows an example of such a system. Only those elements of the Figure 7 embodiments which differ from the Figure 1 embodiment will be discussed here. In Figure 7 the semipermeable membrane 2 is replaced with an cation exchange membrane 2a and an anion exchange membrane 2b. Turbine 3 is absent in Figure 7. As for Figure 1, the salinity of output stream 18 is reduced compared to saturated stream 11 and the salinity of waste stream 14 is increased compared to feed stream 12. However, in Figure 7 this is because positive and negatively charged ions (for example sodium ions and chlorine ions) have passed from the saturated stream 11 to the feed stream 12. This movement across the cation exchange membrane 2a and anion exchange membrane 2b generates an electric charge. The pressure exchanger is absent in the system of Figure 7.

Processes and systems in accordance with the present example embodiment provide recirculation of the high salinity stream/unsaturated saline stream between the brine saturator and the RED osmosis unit, using the osmosis unit to reduce the salinity of the stream before it is passed back to the brine saturator. As a result part of the entropy released during the dissolution process may be captured and used for energy generation. This recirculation (i.e. the closed nature of the feed to the brine saturator) may maintain the purity of the unsaturated saline stream, thereby reducing and/or removing the need for filtering and/or may allow the use of a wider variety of sources for the feed stream, provided the feed stream has a lower salinity than the saturated stream and the diluted outlet stream (particularly as the feed stream does not mix into the brine saturator feed). For example, seawater may be used.

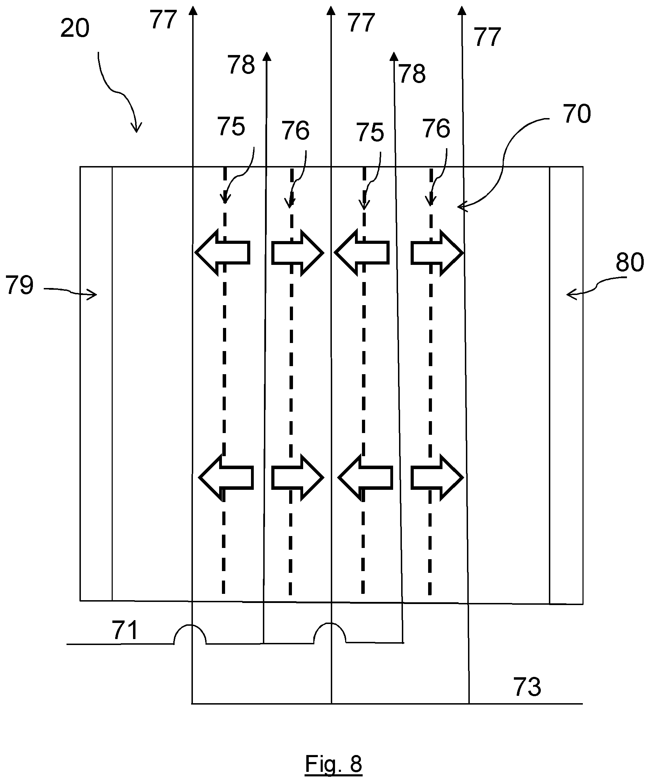

Figure 8 shows more details of an osmotic power unit 20, for example of the type used in Figure 7. The osmotic power unit 20 comprises a stack 70 of cation exchange membranes 75 alternating with an anion exchange membranes 76. The stack 70 is located between a cathode 79 (on the left of Figure 8) and an anode 80 (on the right of Figure 8). A saline stream 71 (which may for example be saturated stream 11) flows between each cation exchange membrane 75 (on the left of stream 71 in Figure 7) which permits the passage of cations (e.g. sodium) but not anions (e.g. chlorine) and an anion exchange membrane 76 (on the right of stream 71 in Figure 8). An aqueous stream 73 which is of lower salinity than stream 71 (for example feed stream 12) flows on the other side of each cation exchange membrane 75 and the anion exchange membrane 76. Thus, there is an alternating series of saline streams 71 and aqueous streams 73 flowing through the stack 70. For the sake of clarity only four membranes are shown in Figure 8, but the stack may include many more membranes. Arrows show the direction of sodium transport across cation exchange membrane 75 and chloride transport across anion exchange membrane 76. This movement of cations and anions across the membranes generates an electric current. An output stream 77 (for example stream 14 in Figure 7) derived from original input stream 73 and now containing a higher concentration of salt, leaves osmotic power unit 70. An output stream 78 consisting of original input stream 71 now containing a lower concentration of salt (for example output stream 18 in Figure 7), leaves osmotic power unit 70.

The energy output of a brine saturator combined with an osmotic power system depends on the specific configuration. Using the equation for mixing energy, it can be shown that the energy potential can be as high as 9 kWh per cubic meter brine produced, equal to 29 kWh per ton of NaCl consumed. Not all this energy can be extracted as components efficiencies will limit the energy available for extraction. For a PRO system, it is known that the optimum operational pressure is 200 bar. Table 1 below shows a balance for the system of Figure 1, which allows a comparison with the performance of a traditional brine saturator.

Assuming efficiencies of 0.7 for the feed pump (4), 0.84 for the energy generating device (3) and 0.95 for the energy recovery device (1), a system as specified in Figure 1 operating at 80 bar would generate 1.3 kWh per cubic meter brine produced, or 4.2 kWh per ton of NaCl consumed, while a system operating at 200 bar would generate 3.5 kWh per cubic meter brine, or 11.4 kWh per ton NaCl. For a chlor alkali plant with a yearly consumption of 1,000,000 ton NaCl this is equal to an energy potential of 4.2-11.4 GWh per year.

In comparison a standard brine saturator would have an energy potential of 0 GWh per year.

| | 1 | 3 | 4 | 11 | 12 | 13 | 14 | 15 | 18a | 18b |
|---|---|---|---|---|---|---|---|---|---|---|
| Operating at 80 bar | | | | | | | | | | |
| Flow (m3/h) | 55 | 100 | 125 | 55 | 125 | 100 | 25 | 155 | 55 | 100 |
| Concentration (g/L) | 310 | 155 | 0 | 310 | 0 | 310 | 0 | 110 | 110 | 110 |
| Pressure (bar) | 80 | 80 | 10 | 0/80 | 0/10 | 0 | 0 | 0 | 80/0 | 80/0 |
| Operating at 200 bar | | | | | | | | | | |
| Flow (m3/h) | 209 | 100 | 125 | 209 | 125 | 100 | 25 | 309 | 209 | 100 |
| Concentration (g/L) | 310 | 210 | 0 | 0 | 0 | 310 | 0 | 210 | 210 | 210 |
| Pressure (bar) | 200 | 200 | 10 | 0/200 | 0/10 | 0 | 0 | 0 | 200/0 | 200/0 |

Whilst the present invention has been described and illustrated with reference to particular embodiments, it will be appreciated by those of ordinary skill in the art that the invention lends itself to many different variations not specifically illustrated herein.

**Claims**

1. A brine saturation process comprising the steps of:

- converting latent osmotic energy present in a high salinity stream (11) into power by passage through an osmotic power unit (20) comprising a membrane (2) in which said high salinity stream (11) is passed over one side of said membrane (2), a low salinity stream (12) being passed over the other side of said membrane (2); and
- using an output stream (18) derived from the high salinity stream (11) following passage through the osmotic power unit (20) as an unsaturated saline stream (15);
**characterized in that** the process further comprises:

- increasing the salinity of the unsaturated saline stream by passage through a brine saturator (5) in which salt (10) is dissolved into the unsaturated saline stream (15) to produce said high salinity stream (11), and
- passing a first part of said high salinity stream (11) to the osmotic power unit (20); a second part (13) of said high salinity stream (11) being output from the process.

2. A process according to claim 1, wherein latent osmotic energy is converted into electricity by passage through the osmotic power unit (20).

3. A process according to claim 1 or claim 2, wherein the second part (13) of the high salinity stream (11) in used in the production of chlorine.

4. A process according to claim 3, wherein the second part (13) of the high salinity stream (11) is used as the electrolyte (63) in an electrolytic cell (50) configured to produce chlorine by electrolysis.

5. A process according to any previous claim, further comprising both (i) increasing the pressure of the high salinity stream (11) prior to passage through the osmotic power unit (20) and (ii) decreasing the pressure of the output stream (18) by passage through a pressure exchanger (1) in which pressure is transferred from the output stream (18) to the high salinity stream (11).

6. A process according to claim 5, further comprising passing a first part (18a) of the output stream (18) through the pressure exchanger (1) and passing a second part (18b) of the output stream (18) through a turbine (3) in which electricity is generated by expansion of the output stream.

7. A process according to claim 6, further recombining the first and second parts (18a, 18b) of the output stream (18) after passage through the pressure exchanger (1) and the turbine (3) respectively for use as the unsaturated saline stream (15).

8. A process according to claim 6 or claim 7, wherein the flow rate of said first part (18a) of the output stream (18) passed to the pressure exchanger (1) is equal to the flow rate of the high salinity stream (11) on entry to the osmotic power unit (20).

9. A process according to any previous claim wherein the osmotic power membrane (2) comprises a semi-permeable membrane which permits the passage of water but not the passage of salts, and wherein said high salinity stream (11) is passed over one side of the semi-permeable membrane, the low salinity stream (12) being passed over the other side of said membrane.

10. A process according to any of claims 1 to 8 wherein the osmotic power unit (20) comprises a cation exchange membrane (2a) and an anion exchange membrane (2b) and wherein the high salinity stream (11) is passed over one side of the cation exchange membrane (2a) and one side of the anion exchange membrane (2b), a low salinity stream (12) being passed over the other side of the cation exchange membrane (2a) and the other side of the anion exchange membrane (2b).

11. A brine saturation system comprising

    - a brine saturator (5); and

        - an osmotic power unit (20) configured to generate power using the difference in salinity between a low salinity stream (12) and a high salinity stream (11);
        and wherein the system is arranged such that:
        an output stream (18) from the osmotic power unit (20) is passed to the brine saturator (5) for use as an unsaturated saline stream (15), said output stream (18) being derived from the high salinity stream (11) following passage through the osmotic power unit (20); and
        - **characterised in that** the brine saturator (5) is configured to increase the salinity of an unsaturated saline stream (15) to produce the high salinity stream (11) through the dissolving of salt (10) into said unsaturated stream (15); and the system is arranged such that a first part of said high salinity stream (11) is passed to the osmotic power unit (20) and a second part (13) of said high salinity stream (11) is output from the system.

12. A brine saturation system according to claim 11, wherein the osmotic power unit (20) is configured to generate electricity using the difference in salinity between a low salinity stream (11) and the high salinity stream (12).

13. A brine saturation system according to claim 12, wherein the osmotic power unit (20) is arranged to generate electricity through Pressure Retarded Osmosis (PRO) or wherein the osmotic power unit (20) is arranged to generate electricity through Reverse Electrodialysis (RED).

14. A brine saturation system according to any of claims 12 to 13, wherein the brine saturator (5) is configured to produce a high salinity stream (11) being a saturated saline stream.

15. A system for the production of chlorine comprising a brine saturation system in accordance with any of claims 11 to 14, and at least one electrolytic cell (50) configured to produce chlorine from electrolysis of brine (63), wherein the system is arranged such that the electrolytic cell (50) receives at least part of the high salinity stream (11) from the brine saturation system.

**Patentansprüche**

1. Salzlakensättigungsprozess, mit folgenden Schritten:

   - Umwandeln von latenter osmotischer Energie, die in einem Strom mit hoher Salzhaltigkeit (11) vorhanden ist, in Leistung durch einen Durchgang durch eine osmotische Leistungseinheit (20) mit einer Membran (2), in der der Strom mit hoher Salzhaltigkeit (11) über eine Seite der Membran (2) geleitet wird, wobei ein Strom mit niedriger Salzhaltigkeit (12) über die andere Seite der Membran (2) geleitet wird; und
   - Verwenden eines Ausgangsstroms (18), der von dem Strom mit hoher Salzhaltigkeit (11) nach einem Durchgang durch die osmotische Leistungseinheit (20) abgeleitet wird, als einen ungesättigten Salzstrom (15);

   **dadurch gekennzeichnet, dass** der Prozess ferner aufweist:

   - Erhöhen der Salzhaltigkeit des ungesättigten Salzstroms durch einen Durchgang durch eine Salzlakensättigungsvorrichtung (5), in der Salz (10) in dem ungesättigten Salzstrom (15) gelöst wird, zum Erzeugen des Stroms mit hoher Salzhaltigkeit (11) und
   - Leiten eines ersten Teils des Stroms mit hoher Salzhaltigkeit (11) zu der osmotischen Leistungseinheit (20); wobei ein zweiter Teil (13) des Stroms mit hoher Salzhaltigkeit (11) von dem Prozess ausgegeben wird.

2. Prozess nach Anspruch 1, bei dem latente osmotische Energie durch einen Durchgang durch die osmotische Leistungseinheit (20) in Elektrizität umgewandelt wird.

3. Prozess nach Anspruch 1 oder Anspruch 2, bei dem der zweite Teil (13) des Stroms mit hoher Salzhaltigkeit (11) bei der Erzeugung von Chlor verwendet wird.

4. Prozess nach Anspruch 3, bei dem der zweite Teil (13) des Stroms mit hoher Salzhaltigkeit (11) als das Elektrolyt (63) in einer Elektrolytzelle (50) verwendet wird, die zum Erzeugen von Chlor durch Elektrolyse ausgebildet ist.

5. Prozess nach einem der vorherigen Ansprüche, ferner mit sowohl (i) Erhöhen des Drucks des Stroms mit hoher Salzhaltigkeit (11) vor einem Durchgang durch die osmotische Leistungseinheit (20) und (ii) Verringern des Drucks des Ausgangsstroms (18) durch einen Durchgang durch einen Drucküberträger (1), in dem Druck von dem Ausgangsstrom (18) auf den Strom mit hoher Salzhaltigkeit (11) übertragen wird.

6. Prozess nach Anspruch 5, ferner mit Leiten eines ersten Teils (18a) des Ausgangsstroms (18) durch den Drucküberträger (1) und Leiten eines zweiten Teils (18b) des Ausgangsstroms (18) durch eine Turbine (3), in der durch Expansion des Ausgangsstroms Elektrizität erzeugt wird.

7. Prozess nach Anspruch 6, ferner mit erneut Kombinieren des ersten und des zweiten Teils (18a, 18b) des Ausgangsstroms (18) nach einem Durchgang jeweils durch den Drucküberträger (1) und die Turbine (3) zur Verwendung als den ungesättigten Salzstrom (15).

8. Prozess nach Anspruch 6 oder Anspruch 7, bei dem die Strömungsrate des ersten Teils (18a) des Ausgangsstroms (18), der zu dem Drucküberträger (1) geleitet wird, gleich der Strömungsrate des Stroms mit hoher Salzhaltigkeit (11) beim Eintritt in die osmotische Leistungseinheit (20) ist.

9. Prozess nach einem der vorhergehenden Ansprüche, bei dem die osmotische Leistungsmembran (2) eine semipermeable Membran aufweist, die den Durchgang von Wasser, jedoch nicht den Durchgang von Salzen erlaubt, und bei dem der Strom mit hoher Salzhaltigkeit (11) über eine Seite der semipermeablen Membran geleitet wird, wobei der Strom mit niedriger Salzhaltigkeit (12) über die andere Seite der Membran geleitet wird.

10. Prozess nach einem der Ansprüche 1 bis 8, bei dem die osmotische Leistungseinheit (20) eine Kationenaustauschmembran (2a) und eine Anionenaustauschmembran (2b) aufweist und bei dem der Strom mit hoher Salzhaltigkeit (11) über eine Seite der Kationenaustauschmembran (2a) und eine Seite der Anionenaustauschmembran (2b) geleitet wird, wobei ein Strom mit niedriger Salzhaltigkeit (12) über die andere Seite der Kationenaustauschmembran (2a) und die andere Seite der Anionenaustauschmembran (2b) geleitet wird.

11. Salzlakensättigungssystem mit

   - einer Salzlakensättigungsvorrichtung (5); und
   - einer osmotischen Leistungseinheit (20), die zum Erzeugen von Leistung unter Verwendung der Differenz hinsichtlich einer Salzhaltigkeit zwischen einem Strom mit niedriger Salzhaltigkeit (12) und einem Strom mit hoher Salzhaltigkeit (11) ausgebildet ist;

   und bei dem das System derart angeordnet ist, dass:

   ein Ausgangsstrom (18) von der osmotischen Leistungseinheit (20) zur Verwendung als ein ungesättigter Salzstrom (15) zu der Salzlakensättigungsvorrichtung (5) geleitet wird, wobei der Ausgangsstrom (18) aus dem Strom mit hoher Salzhaltigkeit (11) nach einem Durchgang durch die osmotische Leistungseinheit (20) abgeleitet wird; und

   - **dadurch gekennzeichnet, dass** die Salzlakenssättigungsvorrichtung (5) zum Erhöhen der Salzhaltigkeit eines ungesättigten Salzstroms (15) zum Erzeugen des Stroms mit hoher Salzhaltigkeit (11) durch das Lösen von Salz (10) in dem ungesättigten Strom (15) ausgebildet ist; und

   das System derart angeordnet ist, dass ein erster Teil des Stroms mit hoher Salzhaltigkeit (11) zu der osmotischen Leistungseinheit (20) geleitet wird und ein zweiter Teil (13) des Stroms mit hoher Salzhaltigkeit (11) von dem System ausgegeben wird.

12. Salzlakensättigungssystem nach Anspruch 11, bei dem die osmotische Leistungseinheit (20) zum Erzeugen von Elektrizität unter Verwendung der Differenz hinsichtlich einer Salzhaltigkeit zwischen einem Strom mit niedriger Salzhaltigkeit (11) und dem Strom mit hoher Salzhaltigkeit (12) ausgebildet ist.

13. Salzlakensättigungssystem nach Anspruch 12, bei dem die osmotische Leistungseinheit (20) zum Erzeugen von Elektrizität durch Pressure Retarded Osmosis (PRO) angeordnet ist oder bei dem die osmotische Leistungseinheit (20) zum Erzeugen von Elektrizität durch Reverse Electrodialysis (RED) angeordnet ist.

14. Salzlakensättigungssystem nach einem der Ansprüche 12 bis 13, bei dem die Salzlakensättigungsvorrichtung (5) zum Erzeugen eines Stroms mit hoher Salzhaltigkeit (11), der ein gesättigter Salzstrom ist, ausgebildet ist.

15. System zur Erzeugung von Chlor, mit einem Salzlakensättigungssystem nach einem der Ansprüche 11 bis 14 und mindestens einer Elektrolytzelle (50), die zum Erzeugen von Chlor durch Elektrolyse einer Salzlake (63) ausgebildet ist, wobei das System derart angeordnet ist, dass die Elektrolytzelle (50) mindestens einen Teil des Stroms mit hoher Salzhaltigkeit (11) von dem Salzlakensättigungssytem erhält.

**Revendications**

1. Procédé de saturation de saumure comprenant les étapes de :

   - conversion de l'énergie osmotique latente présente dans un courant (11) à forte salinité en puissance par passage à travers une unité (20) d'énergie osmotique comprenant une membrane (2) dans laquelle ledit courant (11) à salinité élevée passe sur un côté de ladite membrane (2), un courant (12) à salinité faible passant sur l'autre côté de ladite membrane (2) ; et
- utilisation d'un courant (18) de sortie dérivé du courant (11) à forte salinité après son passage à travers l'unité (20) d'énergie osmotique comme courant (15) salin insaturé ;

le procédé étant **caractérisé en ce qu'**il comprend en outre :

- l'augmentation de la salinité du courant salin insaturé par passage à travers un saturateur de saumure (5) dans lequel du sel (10) est dissous dans le courant (15) salin insaturé afin de produire ledit courant (11) à salinité élevée, et
- le passage d'une première partie dudit courant (11) à salinité élevée vers l'unité (20) d'énergie osmotique ; une seconde partie (13) dudit courant (11) à salinité élevée étant sortie du procédé.

2. Procédé selon la revendication 1, dans lequel l'énergie osmotique latente est convertie en électricité par passage à travers l'unité (20) d'énergie osmotique.

3. Procédé selon la revendication 1 ou la revendication 2, dans lequel la seconde partie (13) du courant (11) à salinité élevée est utilisée dans la production de chlore.

4. Procédé selon la revendication 3, dans lequel la seconde partie (13) du courant (11) à salinité élevée est utilisée comme électrolyte (63) dans une cellule électrolytique (50) configurée pour produire du chlore par électrolyse.

5. Procédé selon une quelconque revendication précédente, comprenant en outre à la fois (i) l'augmentation de la pression du courant (11) à salinité élevée avant le passage à travers l'unité (20) d'énergie osmotique et (ii) la diminution de la pression du courant (18) de sortie par passage à travers un échangeur de pression (1) dans lequel la pression est transférée du courant (18) de sortie au courant (11) à salinité élevée.

6. Procédé selon la revendication 5, comprenant en outre le passage d'une première partie (18a) du courant (18) de sortie à travers l'échangeur de pression (1) et le passage d'une seconde partie (18b) du courant (18) de sortie à travers une turbine (3) dans laquelle de l'électricité est générée par détente du courant de sortie.

7. Procédé selon la revendication 6, comprenant en outre la recombinaison des première et seconde parties (18a, 18b) du courant (18) de sortie après leur passage respectivement à travers l'échangeur de pression (1) et la turbine (3) pour une utilisation comme courant (15) salin insaturé.

8. Procédé selon la revendication 6 ou la revendication 7, dans lequel le débit de ladite première partie (18a) du courant (18) de sortie passant dans l'échangeur de pression (1) est égal au débit du courant (11) à salinité élevée à l'entrée vers l'unité (20) d'énergie osmotique.

9. Procédé selon une quelconque revendication précédente, dans lequel la membrane (2) à énergie osmotique comprend une membrane semi-perméable qui permet le passage de l'eau mais pas celui des sels, et dans lequel ledit courant (11) à salinité élevée passe sur un côté de la membrane semi-perméable, le courant (12) à salinité faible passant sur l'autre côté de ladite membrane.

10. Procédé selon l'une quelconque des revendications 1 à 8, dans lequel l'unité (20) d'énergie osmotique comprend une membrane (2a) échangeuse de cations et une membrane (2b) échangeuse d'anions et dans lequel le courant (11) à salinité élevé passe sur un côté de la membrane (2a) échangeuse de cations et sur un côté de la membrane (2b) échangeuse d'anions, un courant (12) à salinité faible passant sur l'autre côté de la membrane (2a) échangeuse de cations et sur l'autre côté de la membrane (2b) échangeuse d'anions.

11. Système de saturation de saumure comprenant

- un saturateur de saumure (5) ; et
- une unité (20) d'énergie osmotique configurée pour générer de la puissance à l'aide de la différence de salinité entre un courant (12) à salinité faible et un courant (11) à salinité élevé ;

et le système étant conçu de sorte que :
un courant (18) de sortie provenant de l'unité (20) d'énergie osmotique passe vers le saturateur de saumure (5) pour une utilisation comme courant (15) salin insaturé, ledit courant (18) de sortie étant dérivé du courant (11) à salinité élevé après son passage à travers l'unité (20) d'énergie osmotique ; et

- **caractérisé en ce que** le saturateur de saumure (5) est configuré pour augmenter la salinité d'un courant (15) salin insaturé afin de produire le courant (11) à salinité élevé par dissolution de sel (10) dans ledit courant (15) salin insaturé ; et

le système étant conçu de sorte qu'une première partie dudit courant (11) à salinité élevée passe vers l'unité (20) d'énergie osmotique et une seconde partie (13) dudit courant (11) à salinité élevée est sortie du système.

12. Système de saturation de saumure selon la revendication 11, dans lequel l'unité (20) d'énergie osmotique est configurée pour générer de l'électricité à l'aide de la différence de salinité entre un courant (12) à salinité faible et un courant (11) à salinité élevé.

13. Système de saturation de saumure selon la revendication 12, dans lequel l'unité (20) d'énergie osmotique est conçue pour générer de l'électricité par osmose à pression retardée (PRO pour « Pressure Retarded Osmosis ») ou dans lequel l'unité (20) d'énergie osmotique est conçue pour générer de l'électricité par électrodialyse inverse (RED pour « Reverse Electrodialysis »).

14. Système de saturation de saumure selon l'une quelconque des revendications 12 à 13, dans lequel le saturateur de saumure (5) est configuré pour produire un courant (11) à salinité élevée qui est un courant salin saturé.

15. Système de production de chlore comprenant un système de saturation de saumure selon l'une quelconque des revendications 11 à 14, et au moins une cellule électrolytique (50) configurée pour produire du chlore à partir de l'électrolyse de saumure (63), le système étant conçu de sorte que la cellule électrolytique (50) reçoit au moins une partie du courant (11) à salinité élevée provenant du système de saturation de saumure.

Fig. 1

Fig. 2

Fig. 3

EP 4 158 190 B1

Fig. 4

5

40

45

45

41

44

43

42

46

Fig. 5(a)

5

40

42

46

41

45

47

Fig. 5(b)

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4283913 A